# EUROPÄISCHE PATENTSCHRIFT

(11) **EP 1 348 084 B1**
(45) Veröffentlichungstag und Bekanntmachung des Hinweises auf die Patenterteilung: **10.08.2005**
(21) Anmeldenummer: 01990320.2
(22) Anmeldetag: 19.12.2001
(51) Int. Cl.: F16H 29/08

(54) **VORRICHTUNG ZUM ANTREIBEN EINES AUSGANGSGLIEDS**
DEVICE FOR DRIVING AN OUTPUT MECHANISM
DISPOSITIF D'ENTRAINEMENT D'UN ORGANE DE SORTIE

(30) Priorität: 23.12.2000 DE 10064899
(43) Veröffentlichungstag der Anmeldung: 01.10.2003
(60) Teilanmeldung: 04014046.9
(73) Patentinhaber: ROBERT BOSCH GMBH, 70442 Stuttgart (DE)
(72) Erfinder: HOUBEN, Sjeng, B-2328 Pappel (BE)
(74) Vertreter: Daub, Nicole
(86) Internationale Anmeldenummer: PCT/DE2001/004792
(87) Internationale Veröffentlichungsnummer: WO 2002/052173

(56) Entgegenhaltungen:
- EP-A- 0 073 923
- DE-B- 1 049 188
- DE-C- 259 132
- GB-A- 2 054 794
- GB-A- 191 024 157
- US-A- 3 726 149
- US-A- 3 848 474

## Beschreibung

### Stand der Technik

Die Erfindung betrifft eine Vorrichtung zum Antreiben eines Ausgangsglieds mit einer rotierenden Eingangswelle.

Aus dem Stand der Technik sind Vorrichtungen zum Antreiben eines Ausgangsglieds mit einer rotierenden Eingangswelle bekannt, die in Bohrmaschinen, Schlagbohrern oder dergleichen Verwendung finden. Derartige Vorrichtungen weisen zwischen der Eingangswelle und dem Ausgangsglied mehrere als Übersetzung vorgesehene und eine formschlüssige Verbindung zwischen der Eingangswelle und dem Ausgangsglied ausbildende Zahnräder auf, um eine als Antrieb dienende hohe Drehzahl der Eingangswelle in eine niedrigere Bewegungsfrequenz bzw. Drehzahl des Ausgangsglieds bei gleichzeitiger Erhöhung der auf das Ausgangsglied zu übertragenden Antriebskraft zu transformieren.

Nachteilig dabei ist jedoch, daß der Einsatz von Zahnrädern hohe Fertigungskosten bei der Herstellung der bekannten Vorrichtungen verursacht und bei einer Verwendung in Bohrmaschinen, Schlaghämmern oder Bohrschlaghämmern deren Gesamtkosten erhöhen.

Aus der GB 24157 A.D. 1910 ist eine gattungsgemäße Vorrichtung zum Antreiben eines Ausgangsglieds mit einer rotierend antreibbaren Eingangswelle bekannt, wobei zwischen der Eingangswelle und dem Ausgangsglied Mittel zum Übertragen eines Antriebsmoments der Eingangswelle auf das Ausgangsglied angeordnet sind. Zwischen einem ersten Mittel und dem Ausgangsglied ist eine kraftschlüssige Wirkverbindung herstellbar, mittels der eine alternierende Bewegung des ersten Mittels in eine Bewegung des Ausgangsglieds umwandelbar ist. Die kraftschlüssige Wirkverbindung ist durch eine Spannkraft eines Federelements gesteuert.

Ein zweites Mittel ist mit dem ersten Mittel über einen Mitnehmer um einen Drehpunkt drehbar verbunden. Das zweite Mittel ist drehbar auf einer Achse gelagert und mit einem von der Achse radial nach außen gerichteten Arm versehen. Das erste Mittel und das zweite Mittel sind derart drehend miteinander verbunden, dass eine alternierende Bewegung des ersten Mittels eine Drehbewegung des Arms um die Achse und ein Verklemmen eines zwischen einer Innenfläche eines das zweite Mittel umgebenden koaxial zur der Achse angeordneten Ringelements und dem dem Ringelement zugewandten Ende des Arms vorgesehenen Übertragungselements bewirkt.

### Vorteile der Erfindung

Die Erfindung geht aus von einer Vorrichtung zum Antreiben eines Ausgangsglieds mit einer rotierend antreibbaren Eingangswelle, bei welcher zwischen der Eingangswelle und dem Ausgangsglied Mittel zum Übertragen eines Antriebsmoments der Eingangswelle auf das Ausgangsglied angeordnet sind und zwischen einem ersten Mittel und dem Ausgangsglied eine kraftschlüssige Wirkverbindung herstellbar ist, mittels der eine alternierende Bewegung des ersten Mittels in eine Bewegung des Ausgangsglieds umwandelbar ist, wobei die kraftschlüssige Wirkverbindung durch eine Spannkraft eines Federelements gesteuert ist.

Es wird vorgeschlagen, daß ein weiteres Mittel, welches gegenüber dem ersten Mittel verschiebbar angeordnet ist, mit dem ersten Mittel derart in Wirkverbindung steht, daß die alternierene Bewegung des ersten Mittels eine oszillierende Bewegung des weiteren Mittels bewirkt. Dadurch kann erreicht werden, daß das Ausgangsglied abhängig von einem Schaltzustand in zwei entgegengesetzte Drehrichtungen angetrieben werden kann.

Darüber hinaus bietet die erfindungsgemäße Vorrichtung den Vorteil, daß eine hohe Drehzahl der Eingangswelle in eine erheblich langsamere Bewegung bzw. Bewegungsfrequenz des Ausgangsglieds umwandelbar und dabei eine erwünschte große Antriebskraft des Ausgangsglieds erzeugbar ist.

### Zeichnung

Weitere Vorteile ergeben sich aus der folgenden Zeichnungsbeschreibung. In der Zeichnung sind mehrere Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Ausführungsform der erfindungsgemäßen Vorrichtung in einer Längsschnittdarstellung;

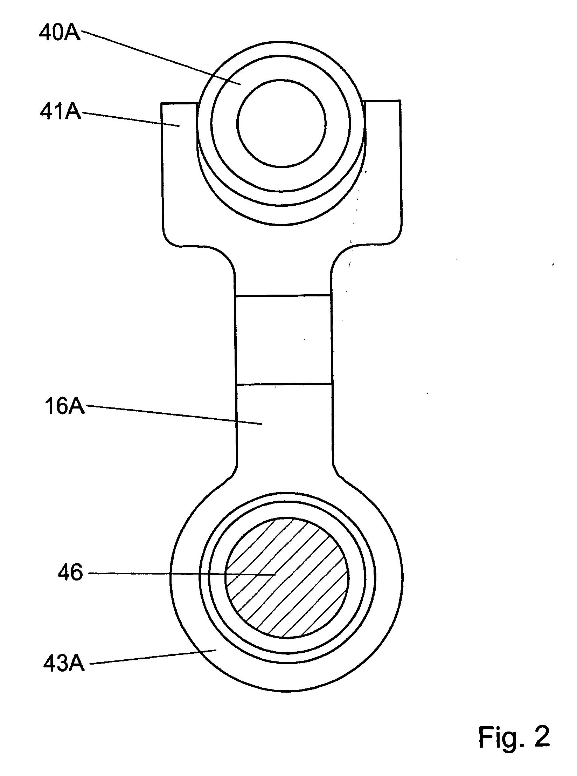

- Fig. 2: eine Schwinge der Vorrichtung gemäß Fig. 1 in Alleinstellung, wobei die Schwinge mit der Eingangswelle und dem Ausgangsglied in Wirkverbindung steht;
- Fig. 3: eine Teilansicht der erfindungsgemäßen Vorrichtung gemäß Fig. 1 und Fig. 2;
- Fig. 4: die Teilansicht der Vorrichtung gemäß Fig. 3 in einer Seitenansicht.

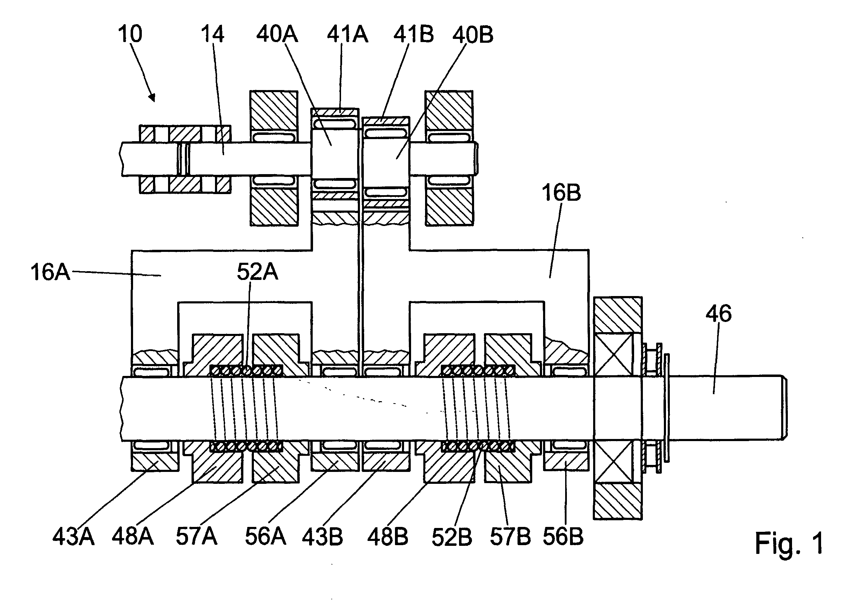

In Fig. 1 ist eine Vorrichtung 10 zum Antreiben eines Ausgangsglieds 46 mit einer rotierend antreibbaren Eingangswelle 14 der Vorrichtung 10, die gleichzeitig die Ausgangswelle eines nicht näher dargestellten Elektromotors ist, dargestellt. Zwischen der Eingangswelle 14 und dem Ausgangsglied 46 sind Mittel zum Übertragen eines Antriebsdrehmoments der Eingangswelle 14 auf das Ausgangsglied 46 angeordnet.

Wie in Fig. 1 dargestellt, ist ein erstes Mittel aus zwei Schwingen 16A und 16B mit im wesentlichen gleichen Aufbau ausgebildet, weshalb bei der nachfolgenden Beschreibung der Funktionsweise der Vorrichtung 10 lediglich auf die Schwinge 16A und dem weiteren Aufbau der Vorrichtung 10 im Bereich der Schwinge 16A eingegangen wird. Der einzige Unterschied ist in der Anordnung der Schwingen 16A und 16B an der Eingangswelle 14 gegeben, da die Eingangswelle 14 zwei um 180° zueinander versetzt angeordnete Exzenter 40A, 40B aufweist, auf welchen die beiden Schwingen 16A und 16B mit zwei Gabeln 41A, 41B geführt sind und bei einer Rotation der Eingangswelle 14 um 180° zueinander phasenverschoben in Bewegung versetzt werden.

Zwei Exzenter 40A, 40B sind als kreisförmige Nocken einstükkig mit der Eingangswelle 14 ausgebildet, wobei deren Rotationsachsen versetzt zu der Rotationsachse der Eingangswelle 14 angeordnet sind. Eine Rotation der Eingangswelle 14 bewirkt eine alternierende Bewegung der Schwinge 16A. Die Schwinge 16A ist über zwei weitere Naben 43A, 56A mit dem Ausgangsglied 46 verbunden und wird in Abhängigkeit von der Stellung des Exzenters 40A um diese hin und her geschwenkt.

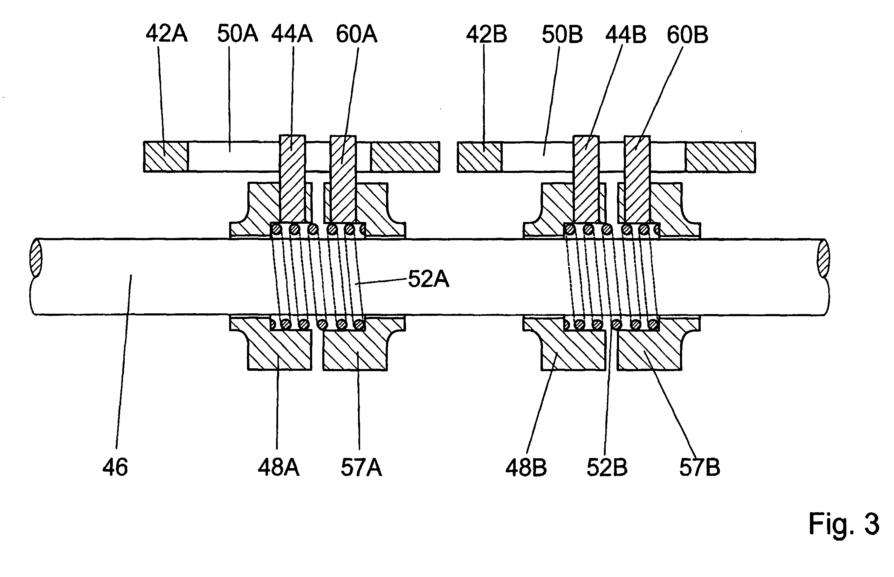

Die alternierende Schwenkbewegung der Schwinge 16A wird auf ein drittes, weiteres Mittel 42A übertragen. Das dritte Mittel 42A, welches gegenüber der Schwinge 16A bzw. dem ersten Mittel axial verschiebbar angeordnet ist, steht jeweils über ein Führungsglied 44A, 60A mit jeweils einem an dem Ausgangsglied 46 angeordneten Ringkörper 48A, 57A in Wirkverbindung, wobei die Führungsglieder 44A, 60A mit ihrem den Ringkörpern 48A, 57A abgewandten Enden jeweils in einer Aussparung 50A des dritten Mittels 42A angeordnet sind und mit ihren den Ringkörpern 48A, 57A zugewandten Enden jeweils fest mit einem der Ringkörper 48A, 57A verbunden sind (Fig. 3).

Zwischen den Ringkörpern 48A, 57A ist eine das Ausgangsglied 46 umgebende Feder 52A angeordnet, wobei die Feder 52A mit ihren den Ringkörpern 48A, 57A zugewandten Enden mit den Ringkörpern 48A, 57A fest verbunden ist.

Die Aussparung 50A des dritten Mittels 42A, welches im vorliegenden Ausführungsbeispiel als eine Platte ausgebildet ist, ist derart vorgesehen, daß die oszillierende Bewegung bzw. Schwenkbewegung der Platte 42A eine zeitlich begrenzte Drehbewegung eines der Ringkörper 48A oder 57A um das Ausgangsglied 46 bewirkt und die Drehbewegung eines der Ringkörper 48A, 57A über die Feder 52A auf das Ausgangsglied 46 übertragen wird. Um eine unbehinderte reibungsfreie Drehbewegung der Ringkörper 48A, 57A zu gewährleisten, sind die beiden Ringkörper 48A, 57A mit einem Spiel auf dem als Welle ausgebildeten Ausgangsglied 46 angeordnet.

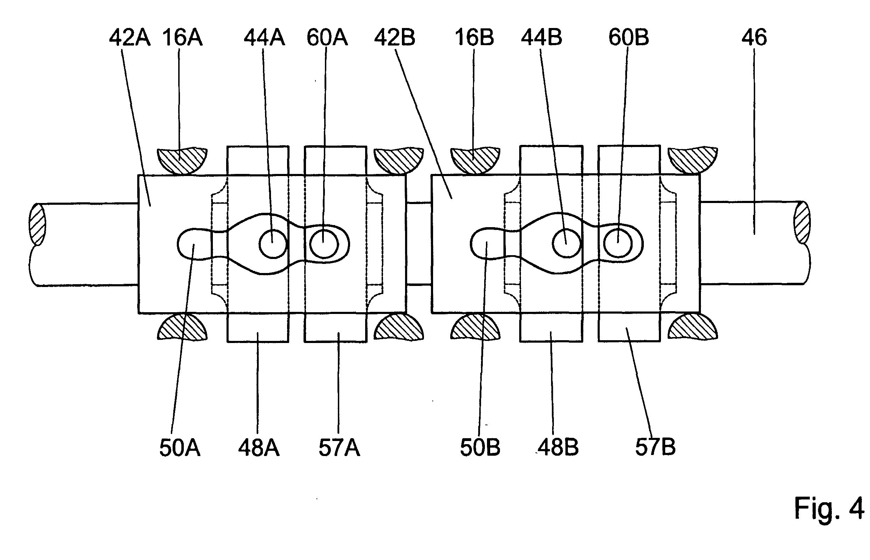

Die Aussparung 50A der Platte 42A erstreckt sich in axialer Richtung des Ausgangsglieds 46 und weist in einem mittleren Bereich einen größeren Durchmesser als die beiden sich jeweils an den mittleren Bereich anschließenden Außenbereiche auf. Befindet sich die Platte 42A in der in Fig. 4 dargestellten Position, wird die oszillierende Bewegung der Platte 42A auf den Ringkörper 57A übertragen und führt zu einer Verdrehung des Ringkörpers 57A. Durch die Verdrehung wird die mit dem Ringkörper 57A fest verbundene, als Schraubenfeder ausgebildete Feder 52A ebenfalls in sich verdreht bzw. verwunden, was eine Reduzierung des Querschnitts der Feder 52A und eine temporäre kraftschlüssige Verbindung zwischen der Feder 52A und dem Ausgangsglied 46 zur Folge hat und letztendlich eine Drehbewegung des Ausgangsglieds 46 bewirkt.

Die zuvor beschriebene Funktionsweise der Anordnung der Schwinge 16A gilt gleichfalls für die Anordnung der Schwinge 16B mit baugleich ausgebildeten Elementen, wobei ein Antrieb des Ausgangsglieds 46 über die Schwinge 16B jeweils bei einer Stellung der Eingangswelle 14 um 180° versetzt zu dem erfolgenden Antrieb der Schwinge 16A erfolgt. Der Antrieb des Ausgangsglieds 46 entspricht jeweils mehreren einzelnen kurz aufeinanderfolgenden Drehbewegungen, die aufgrund der beiden Schwingen 16A, 16B einen nahezu kontinuierlichen Drehantrieb des Ausgangsglieds 46 bewirken.

Wird die Platte 42A von ihrer in Fig. 4 dargestellten Position über ein nicht näher dargestelltes Mittel in axialer Richtung des Ausgangsglieds 46 derart verschoben, daß das Führungsglied 44A in dem in Fig. 4 freien Außenbereich der Aussparung 50A angeordnet ist und das Führungsglied 60A in den mit dem größeren Durchmesser ausgebildeten Mittelbereich der Aussparung 50A angeordnet ist, wird der Ringkörper 48A von der Schwinge 16A über die Platte 42A in Drehung versetzt. Dabei wird das Ausgangsglied 46 in entgegengesetzter Richtung zu der durch den Ringkörper 57A verursachten Drehbewegung angetrieben. Bei einer Umschaltung werden die Mittel bzw. Platten 42A und 42B im wesentlichen gleichzeitig verschoben.

### Bezugszeichen

- 10: Vorrichtung
- 14: Eingangswelle
- 16: Mittel
- 40: Exzenter
- 41: Gabel
- 42: Mittel
- 43: Nabe
- 44: Führungsglied
- 46: Ausgangsglied
- 48: Ringkörper
- 50: Aussparung
- 52: Feder
- 56: Nabe
- 57: Ringkörper
- 60: Führungsglied

## Patentansprüche

1. Vorrichtung (10) zum Antreiben eines Ausgangsglieds (46) mit einem Ausgangsglied (46) und einer rotierend antreibbaren Eingangswelle (14), wobei zwischen der Eingangswelle (14) und dem Ausgangsglied (46) Mittel zum Übertragen eines Antriebsmoments der Eingangswelle (14) auf das Ausgangsglied (46) angeordnet sind, wobei zwischen einem ersten Mittel (16) und dem Ausgangsglied (46) eine kraftschlüssige Wirkverbindung herstellbar ist, mittels der eine alternierende Bewegung des ersten Mittels (16) in eine Bewegung des Ausgangsglieds (46) umwandelbar ist, wobei die kraftschlüssige Wirkverbindung durch eine Spannkraft eines Federelements (52) gesteuert ist, **dadurch gekennzeichnet, daß** ein weiteres Mittel (42), welches gegenüber dem ersten Mittel (16) verschiebbar angeordnet ist, mit dem ersten Mittel (16) derart in Wirkverbindung steht, daß die alternierende Bewegung des ersten Mittels (16) eine oszillierende Bewegung des weiteren Mittels (42) bewirkt.

2. Vorrichtung nach-Anspruch 1, **dadurch gekennzeichnet, daß** die Eingangswelle (14) einen Exzenter (40) aufweist, der mit dem ersten Mittel (16) derart in Wirkverbindung steht, daß das erste Mittel (16) bei rotierender Eingangswelle (14) in Abhängigkeit einer Bewegung des Exzenters (40) alternierend bewegt wird.

3. Vorrichtung nach einem der vorhergehenden, **dadurch gekennzeichnet, daß** die Mittel derart ausgebildet sind, daß eine alternierende Drehbewegung des ersten Mittels (16) in eine rotatorische Bewegung des Ausgangsglieds (46) umwandelbar ist.

4. Vorrichtung nach einem der vorhergehenden Ansprüche, **dadurch gekennzeichnet, daß** eine sich einstellende Übersetzung variierbar ist.

5. Vorrichtung nach einem der vorhergehenden Ansprüche, **dadurch gekennzeichnet, daß** das weitere Mittel (42) jeweils über ein Führungsglied (44, 60) mit jeweils einem an dem Ausgangsglied (46) angeordneten Ringkörper (48, 57) in Wirkverbindung steht, wobei die Führungsglieder (44, 60) mit ihren den Ringkörpern (48, 57) abgewandten Enden jeweils in einer Aussparung (50) des weiteren Mittels (42) angeordnet sind und mit ihren den Ringkörpern (48, 57) zugewandten Enden jeweils fest mit einem der Ringkörper (48, 57) verbunden sind.

6. Vorrichtung nach Anspruch 5, **dadurch gekennzeichnet, daß** zwischen den Ringkörpern (48, 57) eine das Ausgangsglied (46) umgebende Feder (52) angeordnet ist, wobei die Feder (52) mit ihren den Ringkörpern (48, 57) zugewandten Enden mit den Ringkörpern (48, 57) drehfest verbunden ist.

7. Vorrichtung nach Anspruch 5 oder 6, **dadurch gekennzeichnet, daß** die Aussparung (50) des weiteren Mittels (42) derart ausgebildet ist, daß die oszillierende Bewegung des weiteren Mittels (42) eine Drehbewegung eines der Ringkörper (48, 57) bewirkt, und die Drehbewegung eines der Ringkörper (48 oder 57) über die Feder (52) auf das Ausgangsglied (46) übertragbar ist.

## Claims

1. Device (10) for driving an output member (46), with an output member (46) and an input shaft (14) capable of being driven in rotation, there being arranged between the input shaft (14) and the output member (46) means for transmitting a drive torque of the input shaft (14) to the output member (46), a non-positive operative connection being capable of being produced between a first means (16) and the output member (46), by means of which operative connection an alternating movement of the first means (16) can be converted into a movement of the output member (46), the non-positive operative connection being controlled by virtue of a tension force of a spring element (52), **characterized in that** a further means (42), which is arranged displaceably with respect to the first means (16), is operatively connected to the first means (15) in such a way that the alternating movement of the first means (16) brings about an oscillating movement of the further means (42).

2. Device according to Claim 1, **characterized in that** the input shaft (14) has an eccentric (40) which is operatively connected to the first means (16) in such a way that, with the input shaft (14) rotating, the first means (16) is moved in alternation as a function of the movement of the eccentric (40).

3. Device according to one of the preceding claims, **characterized in that** the means are designed in such a way that an alternating rotational movement of the first means (16) can be converted into a rotational movement of the output member (46).

4. Device according to one of the preceding claims, **characterized in that** a transmission ratio which is established can be varied.

5. Device according to one of the preceding claims, **characterized in that** the further means (42) is operatively connected, in each case via a guide member (44, 60), in each case to an annular body (48, 57) arranged on the output member (46), the guide members (44, 60) being arranged, with their ends facing away from the annular bodies (48, 57), in each case in a clearance (50) of the further means (42) and being connected, with their ends facing the annular bodies (48, 57), in each case firmly to one of the annular bodies (48, 57).

6. Device according to Claim 5, **characterized in that** a spring (52) surrounding the output member (46) is arranged between the annular bodies (48, 57), the spring (52) being connected, with its ends facing the annular bodies (48, 57), fixedly in terms of rotation to the annular bodies (48, 57).

7. Device according to Claim 5 or 6, **characterized in that** the clearance (50) of the further means (42) is designed in such a way that the oscillating movement of the further means (42) brings about a rotational movement of one of the annular bodies (48, 57), and the rotational movement of the one of the annular bodies (48 or 57) can be transmitted to the output member (46) via the spring (52).

## Revendications

1. Dispositif (10) d'entraînement d'un organe de sortie (46), comprenant un organe de sortie (46) et un arbre d'entrée (14) pouvant être entraîné en rotation, des moyens de transmission d'un couple d'entraînement de l'arbre d'entrée (14) disposés sur l'organe de sortie (46) entre l'arbre d'entrée (14) et l'organe de sortie (46), une liaison active par complémentarité de force créée entre un premier moyen (16) et l'organe de sortie (46) pouvant convertir un mouvement alternatif du premier moyen (16) en un mouvement de l'organe de sortie (46), la liaison active par complémentarité de force étant commandée par une force de contrainte d'un élément élastique (52),
**caractérisé en ce qu'**
un autre moyen (42) mobile par rapport au premier moyen (16) est en liaison active avec le premier moyen (16) de sorte que le mouvement alternatif du premier moyen (16) provoque un mouvement oscillant de l'autre moyen (42).

2. Dispositif selon la revendication 1,
**caractérisé en ce que**
l'arbre d'entrée (14) présente un excentrique (40) en liaison active avec le premier moyen (16) de sorte que le premier moyen (16) se déplace en va-et-vient en fonction d'un mouvement de l'excentrique (40) lorsque l'arbre d'entrée (14) tourne.

3. Dispositif selon l'une quelconque des revendications précédentes,
**caractérisé en ce que**
les moyens sont conçus pour convertir un mouvement de rotation alternatif du premier moyen (16) en un mouvement de rotation de l'organe de sortie (46).

4. Dispositif selon l'une quelconque des revendications précédentes,
**caractérisé par**
une démultiplication réglable variable.

5. Dispositif selon l'une quelconque des revendications précédentes,
**caractérisé en ce que**
l'autre moyen (42) coopère avec chaque fois un corps annulaire (48, 57) disposé sur l'organe de sortie (46) par chaque fois un organe de guidage (44, 60), dont les extrémités opposées aux corps annulaires (48, 57) sont logées dans une cavité (50) de l'autre moyen (42), alors que les extrémités des organes de guidage (44, 60) tournées vers les corps annulaires (48, 57) sont fixées chaque fois à l'un des corps annulaires (48, 57).

6. Dispositif selon la revendication 5,
**caractérisé en ce qu'**
un ressort (52) entourant l'organe de sortie (46) est disposé entre les corps annulaires (48, 57), le ressort (52) étant relié sans rotation possible aux corps annulaires (48, 57) par leurs extrémités tournées vers les corps annulaires (48, 57).

7. Dispositif selon la revendication 5 ou 6,
**caractérisé en ce que**
la cavité (50) de l'autre moyen (42) est conçue pour que le mouvement oscillant de l'autre moyen (42) provoque un mouvement de rotation d'un des corps annulaires (48, 57) et pour que le mouvement de rotation d'un des corps annulaires (48 ou 57) puisse être transmis par le ressort (52) à l'organe de sortie (46).
